# EUROPEAN PATENT APPLICATION

(11) **EP 4 692 140 A1**
(43) Date of publication of application: **11.02.2026**
(21) Application number: 24779349.0
(22) Date of filing: 11.03.2024
(51) Int. Cl.: C08F 220/12, C08C 1/15, C08F 2/24, C08F 4/34, C08F 6/22, C08F 222/00

(54) **ACRYLIC COPOLYMER, ACRYLIC COPOLYMER-CONTAINING COMPOSITION, ACRYLIC RUBBER CROSSLINKED PRODUCT, AND METHOD FOR PRODUCING ACRYLIC COPOLYMER**

(30) Priority: 31.03.2023 JP 2023059461
(71) Applicant: Osaka Soda Co., Ltd., Osaka-shi, Osaka 530-0001 (JP)
(72) Inventor: NAITOU, Masatsugu, Osaka-shi, Osaka 550-0011 (JP); KAWAMURA, Mayu, Osaka-shi, Osaka 550-0011 (JP); KITAGAWA, Motoki, Osaka-shi, Osaka 550-0011 (JP); MOROOKA, Yoshihiro, Osaka-shi, Osaka 550-0011 (JP)
(74) Representative: Vossius & Partner Patentanwälte Rechtsanwälte mbB
(86) International application number: PCT/JP2024/009309
(87) International publication number: WO 2024/203219

(57) **Abstract**

Provided are an acrylic copolymer, an acrylic copolymer-containing composition, and a crosslinked product thereof, each achieving both processability and low compression set and also having sufficient mechanical strength, as well as a method for producing the acrylic copolymer. It has been found that a composition containing an acrylic copolymer, in which a polymerization initiator-derived substituent has been introduced into at least one end or both ends of the polymer chain, has excellent processability, and that a crosslinked product obtained by crosslinking the composition has excellent low compression set and excellent mechanical strength.

## Description

### TECHNICAL FIELD

The present invention relates to an acrylic copolymer, an acrylic copolymer-containing composition and a crosslinked product thereof, and a method for producing an acrylic copolymer.

### BACKGROUND ART

General acrylic copolymers are polymers made mainly from alkyl (meth)acrylates. They are known as materials with excellent durability-related physical properties and are widely used in industrial rubber materials or automotive rubber materials for engine gaskets, oil hoses, air hoses, O-rings, etc.

When acrylic copolymers are used in automotive rubber materials for hoses, gaskets, etc. as described above, they are required to excel in compression set to exhibit sufficient sealing performance. Moreover, the acrylic copolymers also need to excel in processability because they need to allow for various forming methods to form hoses, gaskets, etc. Crosslinked products thereof need to have sufficient mechanical strength.

Generally, an approach of increasing crosslinking density is used to achieve low compression set and mechanical strength. However, there is a trade-off such that increasing crosslinking density accelerates vulcanization rate, thereby deteriorating processability.

Under this circumstance, Patent Literature 1 proposes an acrylic copolymer composition which contains an acrylic copolymer composed of: an alkyl acrylate having a C1-C8 alkyl group and an alkoxyalkyl acrylate having a C1-C4 alkoxy group and a C1-C4 alkylene group; and dicyclopentadiene, ethylidene norbornene, and a dicyclopentenyl group-containing ester of an unsaturated carboxylic acid, an organic peroxide as a crosslinking agent, and a crosslinking aid with two or more (meth)acrylates, and which can be processed into a vulcanized acrylic rubber product with excellent low compression set.

### CITATION LIST

### - Patent Literature

Patent Literature 1: JP 5010663 B

### SUMMARY OF INVENTION

### - Technical Problem

In view of the above problem, the present invention aims to provide an acrylic copolymer, an acrylic copolymer-containing composition, and a crosslinked product thereof, each achieving both processability and low compression set and also having sufficient mechanical strength, as well as a method for producing the acrylic copolymer.

### - Solution to Problem

As a result of various studies to achieve the aim, the present inventors have found that a composition containing an acrylic copolymer in which a polymerization initiator-derived substituent has been introduced into at least one end or both ends of the polymer chain has excellent processability, and that a crosslinked product obtained by crosslinking the composition has excellent low compression set and excellent mechanical strength, thereby completing the present invention. Here, the crosslinked product is also described as "crosslinked acrylic copolymer product".

The present invention includes the following embodiments.

Embodiment 1. An acrylic copolymer, containing at least an alkyl acrylate-derived structural unit, a crosslinkable monomer-derived structural unit, and a polymerization initiator-derived structural unit, the acrylic copolymer satisfying the following conditions (A) and (B):
(A) the polymerization initiator-derived structural unit is a structural unit derived from a compound represented by the following formula (1) or (2): 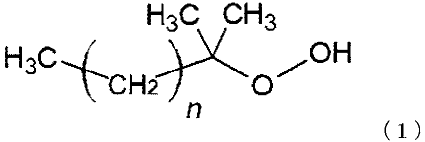 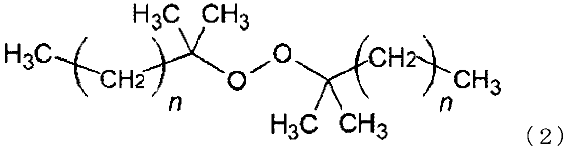 wherein n represents a natural number, and 1 ≤ n ≤ 4; and
(B) the acrylic copolymer has a residual monovalent metal ion content of 30 mass ppm or higher and 5000 mass ppm or lower, a residual divalent or higher-valent metal ion content of 300 mass ppm or lower, and a ratio of the residual monovalent metal ion content to the residual divalent or higher-valent metal ion content ([residual monovalent metal ion content]/[residual divalent or higher-valent metal ion content]) of 10 or more.

Embodiment 2. The acrylic copolymer according to Embodiment 1,
wherein, per 100 mass% of the acrylic copolymer, an amount of alkyl acrylate-derived structural units is 50 to 99.8 mass%, an amount of crosslinkable monomer-derived structural units is 0.1 to 10 mass%, and an amount of polymerization initiator-derived structural units is 0.001 to 2 mass%.

Embodiment 3. The acrylic copolymer according to Embodiment 1 or 2,
wherein at least one of the following is satisfied:
an amount of structural units derived from alkyl acrylates with C1-C3 alkyl groups is 0 to 100 mass% per 100 mass% of alkyl acrylate-derived structural units;
an amount of structural units derived from alkyl acrylates with C4-C6 alkyl groups is 0 to 100 mass% per 100 mass% of alkyl acrylate-derived structural units.

Embodiment 4. The acrylic copolymer according to any one of Embodiments 1 to 3,
wherein the crosslinkable monomer-derived structural unit is a structural unit derived from a carboxyl group-containing crosslinkable monomer.

Embodiment 5. An acrylic copolymer-containing composition, containing the acrylic copolymer according to any one of Embodiments 1 to 4 and at least a crosslinking agent.

Embodiment 6. A crosslinked acrylic rubber product, obtained by crosslinking the acrylic copolymer-containing composition according to Embodiment 5.

Embodiment 7. A method for producing the acrylic copolymer according to any one of Embodiments 1 to 4, the method including:
emulsion polymerizing acrylic copolymer components, including at least an alkyl acrylate, a crosslinkable monomer, and an alkyl group-containing polymerization initiator, using an emulsifier to obtain an emulsion polymerization liquid;
performing salting-out with 0.01 to 10 parts by mass of a monovalent metal salt relative to 100 parts by mass of the emulsion polymerization liquid to obtain a water-containing crumb;
washing the water-containing crumb with water; and
drying the washed water-containing crumb.

Embodiment 8. The method for producing the acrylic copolymer according to Embodiment 7,
wherein the monovalent metal salt is at least one selected from the group consisting of metal sulfates, metal acetates, or metal carbonates of sodium.

### - Advantageous Effects of Invention

The present invention can provide an acrylic copolymer, an acrylic copolymer-containing composition, and a crosslinked acrylic copolymer product, each achieving both processability and low compression set and also having sufficient mechanical strength, as well as a method for producing the acrylic copolymer.

### DESCRIPTION OF EMBODIMENTS

The acrylic copolymer of the present invention has a polymerization initiator-derived substituent at at least one end or both ends of the polymer chain. More specifically, the acrylic copolymer of the present invention contains an alkyl acrylate-derived structural unit, a crosslinkable monomer-derived structural unit, and a structural unit derived from an alkyl group-containing polymerization initiator (preferably, a structural unit derived from a compound represented by the above formula (1) or formula (2)) and has a polymerization initiator-derived substituent at at least one end or both ends of the copolymer. Such an acrylic copolymer provides good processability. Moreover, the acrylic copolymer of the present invention provides good low compression set because the types and amounts of residual metals in the copolymer are adjusted within specific ranges. Since the acrylic copolymer of the present invention has a polymerization initiator-derived substituent at at least one end or both ends of the copolymer, and the types and amounts of residual metals in the copolymer are adjusted within specific ranges, the present invention can provide an acrylic copolymer, an acrylic copolymer-containing composition, and a crosslinked acrylic copolymer product, each achieving both processability and low compression set and also having sufficient mechanical strength.

### <Acrylic copolymer>

The acrylic copolymer of the present invention has a polymerization initiator-derived substituent at at least one end or both ends of the polymer chain. More specifically, the acrylic copolymer of the present invention contains an alkyl acrylate-derived structural unit, a crosslinkable monomer-derived structural unit, and a polymerization initiator-derived structural unit, and has a polymerization initiator-derived substituent at at least one end or both ends (preferably one end) of the copolymer chain.

The alkyl acrylate-derived structural unit preferably includes a structural unit derived from an alkyl acrylate with a C1-C3 alkyl group and/or a structural unit derived from an alkyl acrylate with a C4-C6 alkyl group. These structural units derived from alkyl acrylates may each be a single alkyl acrylate-derived structural unit or a combination of two or more thereof.

Specific examples of the alkyl acrylate with a C1-C3 alkyl group include methyl acrylate, ethyl acrylate, n-propyl acrylate, and isopropyl acrylate, with methyl acrylate or ethyl acrylate being preferred.

Specific examples of the alkyl acrylate with a C4-C6 alkyl group include alkyl acrylates such as n-butyl acrylate, n-pentyl acrylate, and n-hexyl acrylate, with n-butyl acrylate being preferred.

The amount of structural units derived from alkyl acrylates with C1-C3 alkyl groups per 100 mass% of alkyl acrylate-derived structural units is preferably 0 to 100 mass%. More specifically, the lower limit of the amount is preferably 0 mass% or more, more preferably 10 mass% or more, still more preferably 20 mass% or more, particularly preferably 25 mass% or more, most preferably 30 mass% or more, while the upper limit is preferably 100 mass% or less, more preferably 90 mass% or less, still more preferably 80 mass% or less, particularly preferably 70 mass% or less, most preferably 60 mass% or less. Herein, the term "to" in ranges means at least the value before "to" but not more than the value after "to".

The amount of structural units derived from alkyl acrylates with C4-C6 alkyl groups per 100 mass% of alkyl acrylate-derived structural units is preferably 0 to 100 mass%. More specifically, the lower limit of the amount is preferably 0 mass% or more, more preferably 10 mass% or more, still more preferably 20 mass% or more, particularly preferably 30 mass% or more, most preferably 40% or more, while the upper limit is preferably 100 mass% or less, more preferably 90 mass% or less, still more preferably 80 mass% or less, particularly preferably 75 mass% or less, most preferably 70 mass% or less.

The amount of alkyl acrylate-derived structural units per 100 mass% of the acrylic copolymer of the present invention is preferably 50 to 99.8 mass%. More specifically, the lower limit of the amount is preferably 50 mass% or more, more preferably 60 mass% or more, still more preferably 70 mass% or more, particularly preferably 80 mass% or more, most preferably 90 mass% or more, while the upper limit is preferably 99.8 mass% or less, more preferably 99.5 mass% or less, most preferably 99 mass% or less. With such an amount, the advantageous effect tends to be more suitably achieved.

Herein, the amount of alkyl acrylate-derived structural units refers to the total amount of multiple structural units, if present. The same applies to other structural units.

The crosslinkable monomer-derived structural unit may be any structural unit having a crosslinking group reactive with a crosslinking agent. Examples of the crosslinking group include a carboxyl group, an epoxy group, and a halogen group. Such crosslinkable monomer-derived structural units may be used alone or in combination of two or more. Preferred among these are crosslinkable monomer-derived structural units having a carboxyl group as a crosslinking group.

Examples of crosslinkable monomer-derived structural units having a carboxyl group as a crosslinking group include structural units derived from ethylenically unsaturated monocarboxylic acids such as methacrylic acid, acrylic acid, crotonic acid, 2-pentenoic acid, and cinnamic acid; structural units derived from ethylenically unsaturated dicarboxylic acids such as fumaric acid, maleic acid, and itaconic acid; and structural units derived from ethylenically unsaturated dicarboxylic acid monoesters, including monoalkyl fumarates such as monomethyl fumarate, monoethyl fumarate, monopropyl fumarate, monobutyl fumarate, monohexyl fumarate, and monooctyl fumarate, monoalkyl maleates such as monomethyl maleate, monoethyl maleate, monopropyl maleate, monobutyl maleate, monopentyl maleate, and monodecyl maleate, and monoalkyl itaconates such as monomethyl itaconate, monoethyl itaconate, monopropyl itaconate, and monobutyl itaconate. These may be used alone or in combination of two or more. Preferred are structural units derived from ethylenically unsaturated dicarboxylic acid monoesters; more preferred are structural units derived from monoalkyl fumarates; and most preferred are structural units derived from monoalkyl fumarates with C1-C4 alkyl groups.

Examples of crosslinkable monomer-derived structural units having an epoxy group as a crosslinking group include structural units derived from epoxy group-containing alkyl acrylates such as glycidyl acrylate, structural units derived from epoxy group-containing styrenes such as p-vinylbenzyl glycidyl ether, and structural units derived from epoxy group-containing ethers such as allyl glycidyl ether, vinyl glycidyl ether, 3,4-epoxy-1-pentene, 3,4-epoxy-1-butene, 4,5-epoxy-2-pentene, 4-vinylcyclohexyl glycidyl ether, cyclohexenyl methyl glycidyl ether, 3,4-epoxy-1-vinylcyclohexene, and allylphenyl glycidyl ether. These may be used alone or in combination of two or more.

Examples of crosslinkable monomer-derived structural units having a halogen group as a crosslinking group include structural units derived from 2-chloroethyl vinyl ether, 2-chloroethyl acrylate, vinylbenzyl chloride, vinyl monochloroacetate, allyl chloroacetate, etc. These may be used alone or in combination of two or more.

The amount of crosslinkable monomer-derived structural units per 100 mass% of the acrylic copolymer of the present invention is preferably 0.1 mass% or more, more preferably 0.3 mass% or more, still more preferably 0.5 mass% or more, while it is preferably 10 mass% or less, more preferably 5 mass% or less, still more preferably 2.5 mass% or less. With such an amount, the advantageous effect tends to be more suitably achieved.

The polymerization initiator-derived structural unit may be any structural unit derived from a polymerization initiator represented by the following formula (1) or (2). Specific preferred examples include peroxide polymerization initiators such as t-amyl hydroperoxide and di-t-amyl hydroperoxide. These polymerization initiators may be used alone or in combination of two or more. 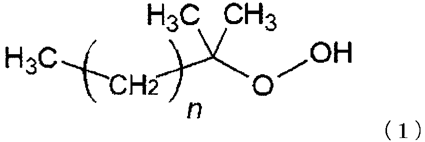 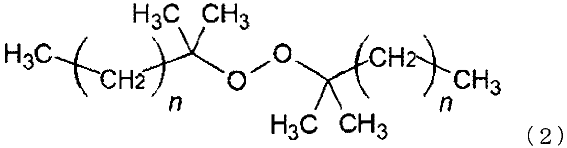 (n represents a natural number, and 1 ≤ n ≤ 4.)

The natural number n is 1 to 4, and the upper limit of n is preferably 3 or less, more preferably 2 or less, and n is still more preferably 1.

The amount of polymerization initiator-derived structural units (structural units derived from compounds of formula (1) or (2)) per 100 mass% of the acrylic copolymer of the present invention is preferably 0.001 to 2.0 mass%. More specifically, the lower limit of the amount is preferably 0.001 mass% or more, more preferably 0.005 mass% or more, still more preferably 0.01 mass% or more, particularly preferably 0.02 mass% or more, while the upper limit is preferably 2.0 mass% or less, more preferably 1.50 mass% or less, still more preferably 0.50 mass% or less, particularly preferably 0.20 mass% or less. With such an amount, the advantageous effect tends to be more suitably achieved.

In the acrylic copolymer of the present invention, the combined amount of alkyl acrylate-derived structural units, crosslinkable monomer-derived structural units, and alkyl group-containing polymerization initiator-derived structural units (structural units derived from compounds of formula (1) or (2)) per 100 mass% of the acrylic copolymer is preferably 70 mass% or more, more preferably 80 mass% or more, still more preferably 90 mass% or more, particularly preferably 95 mass% or more, and may be 100 mass%. With such an amount, the advantageous effect tends to be more suitably achieved.

The acrylic copolymer of the present invention may further contain a copolymerizable monomer other than the above-described monomers as a structural unit of the acrylic copolymer without departing from the gist of the present invention. Examples of such other monomers include alkoxyalkyl acrylates, ethylenically unsaturated nitrile monomers, acrylamide monomers, aromatic vinyl monomers, conjugated diene monomers, non-conjugated diene monomers, other olefin monomers, and copolymerizable antioxidants. These may be used alone or in combination of two or more.

Examples of alkoxyalkyl acrylates include alkyl acrylates such as methoxymethyl acrylate, methoxyethyl acrylate, ethoxymethyl acrylate, 2-ethoxyethyl acrylate, 2-propoxyethyl acrylate, 2-butoxyethyl acrylate, 2-methoxypropyl acrylate, 2-ethoxypropyl acrylate, 3-methoxypropyl acrylate, 3-ethoxypropyl acrylate, 4-methoxybutyl acrylate, and 4-ethoxybutyl acrylate. Preferred is 2-methoxyethyl acrylate. These may be used alone or in combination of two or more.

Examples of ethylenically unsaturated nitrile monomers include acrylonitrile, methacrylonitrile, α-methoxyacrylonitrile, and vinylidene cyanide. These may be used alone or in combination of two or more.

Examples of acrylamide monomers include acrylamide, methacrylamide, diacetone acrylamide, diacetone methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propyoxymethylacrylamide, N-propyoxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamic acid amide, maleic diamide, itaconic diamide, methyl maleamide, methyl itaconamide, maleimide, and itaconimide. These may be used alone or in combination of two or more.

Examples of aromatic vinyl monomers include styrene, α-methylstyrene, o-methylstyrene, p-methylstyrene, o-ethylstyrene, p-ethylstyrene, α-fluorostyrene, p-trifluoromethylstyrene, p-methoxystyrene, p-aminostyrene, p-dimethylaminostyrene, p-acetoxystyrene, styrenesulfonic acid and salts thereof, α-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride. These may be used alone or in combination of two or more.

Examples of conjugated diene monomers include 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene. These may be used alone or in combination of two or more.

Examples of non-conjugated diene monomers include 1,4-pentadiene, 1,4-hexadiene, ethylidene norbornene, norbornadiene, and dicyclopentadiene. These may be used alone or in combination of two or more.

Examples of other olefin monomers include esters such as dicyclopentadienyl acrylate, dicyclopentadienyl methacrylate, dicyclopentadienylethyl acrylate, and dicyclopentadienylethyl methacrylate; and ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, 1,2-dibromoethylene, ethyl vinyl ether, and butyl vinyl ether. These may be used alone or in combination of two or more.

Examples of copolymerizable antioxidants include structural units derived from copolymerizable amine antioxidants such as N-(4-anilinophenyl)methacrylamide, N-(4-anilinophenyl)acrylamide, N-(4-anilinophenyl)maleimide, N-(4-p-toluidinylphenyl)maleimide, N-(4-anilino-1-naphthyl)maleimide, 4-hydroxyphenyl maleimide, and 3-hydroxyphenyl maleimide, and copolymerizable phenolic antioxidants such as 2-tert-butyl-4-methyl-6-(2-hydroxy-3-tert-butyl-5-methylbenzyl)phenyl acrylate, 1'-hydroxy[2,2'-ethylidenebis[4,6-bis(1,1-dimethylpropyl)benzen]]-1-yl acrylate, hydroxycinnamic acid, ferulic acid, and allyl cresol. These may be used alone or in combination of two or more.

The amounts of structural units in the acrylic copolymer of the present invention can be determined from the nuclear magnetic resonance spectrum of the obtained polymer.

### <Method for producing acrylic copolymer>

The acrylic copolymer of the present invention can be produced by polymerizing the different monomers. The monomers used may be commercial products and are not limited. The acrylic copolymer used in the present invention has a polymerization initiator-derived substituent at at least one end or both ends of the polymer chain. Such an acrylic copolymer can be produced by polymerization using, for example, an alkyl group-containing polymerization initiator (a compound represented by the above formula (1) or (2)) as described above to obtain an acrylic copolymer having the polymerization initiator-derived alkyl group at the polymerization initiation end of the polymer chain.

The method for producing the acrylic copolymer of the present invention preferably includes:
emulsion polymerizing acrylic copolymer components, including at least an alkyl acrylate, a crosslinkable monomer, and an alkyl group-containing polymerization initiator (a compound represented by the above formula (1) or (2)), using an emulsifier to obtain an emulsion polymerization liquid;
performing salting-out with 0.01 to 10 parts by mass of a monovalent metal salt relative to 100 parts by mass of the emulsion polymerization liquid to obtain a water-containing crumb;
washing the water-containing crumb with water; and
drying the washed water-containing crumb.

### <Emulsion polymerization step>

The mode of the polymerization reaction may be any of the following polymerization methods: emulsion polymerization, suspension polymerization, bulk polymerization, and solution polymerization. In view of ease in controlling the polymerization reaction and other factors, it is preferably emulsion polymerization under normal pressure, which is generally employed in conventionally known acrylic copolymer production processes.

The polymerization by emulsion polymerization may be carried out by a usual method. Conventional and common polymerization initiators, emulsifiers, chain transfer agents, polymerization terminators, and other agents may be used. Here, the polymerization initiator to be used is preferably an alkyl group-containing polymerization initiator (a compound represented by the formula (1) or (2)) as described above.

Any emulsifier may be used in the present invention, including nonionic and anionic emulsifiers commonly used in emulsion polymerization. Examples of nonionic emulsifiers include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of anionic emulsifiers include alkylbenzene sulfonates, alkyl sulfates, polyoxyethylene alkyl ether sulfates, polyoxyalkylene alkyl ether phosphates and salts thereof, and fatty acid salts. One type or two or more types of these emulsifiers may be used. Typical examples of anionic emulsifiers include sodium dodecyl sulfate, sodium dodecylbenzene sulfonate, and triethanolamine dodecyl sulfate.

The amount of emulsifiers used in the present invention may be an amount as generally used in emulsion polymerization. Specifically, the amount relative to 100 parts by mass of the monomers constituting the acrylic copolymer is in the range of 0.01 parts by mass to 10 parts by mass, preferably 0.03 parts by mass to 7 parts by mass, still more preferably 0.05 parts by mass to 5 parts by mass. When a reactive surfactant is used as a monomer component, it is not always necessary to add an emulsifier.

The polymerization initiator used in the present invention may be any polymerization initiator represented by the following formula (1) or (2). Specific preferred examples include peroxide polymerization initiators such as t-amyl hydroperoxide and di-t-amyl hydroperoxide. These polymerization initiators may be used alone or in combination of two or more. 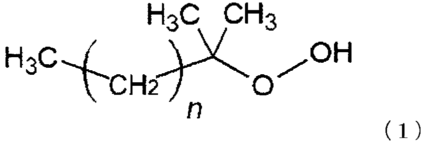 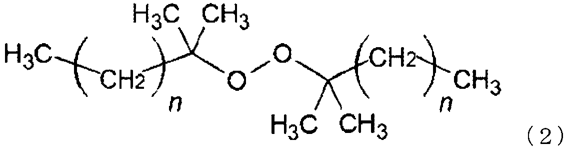 (n represents a natural number, and 1 ≤ n ≤ 4.)

The natural number n is 1 to 4, and the upper limit of n is preferably 3 or less, more preferably 2 or less, and n is still more preferably 1.

The amount of the polymerization initiator(s) used in the present invention may be an amount as generally used in emulsion polymerization. Specifically, the amount relative to 100 parts by mass of the polymerizable monomers constituting the acrylic copolymer is in the range of 0.001 parts by mass to 2 parts by mass, preferably 0.005 parts by mass to 1.50 parts by mass, more preferably 0.01 parts by mass to 0.5 parts by mass.

Moreover, organic or inorganic peroxides as polymerization initiators may be combined with reductants to serve as redox polymerization initiators. Non-limiting examples of reductants that may be used in combination include compounds containing reduced metal ions, such as ferrous sulfate and cuprous naphthenate; methane compounds such as sodium methanesulfonate; amine compounds such as dimethylaniline; ascorbic acid and salts thereof; and reducing inorganic salts such as alkali metal salts of sulfurous acid or thiosulfuric acid. These reductants may be used alone or in combination of two or more. The amount of reductants relative to 100 parts by mass of the monomers constituting the acrylic copolymer is preferably 0.0003 to 10.0 parts by mass.

A chain transfer agent may be used, if needed. Specific examples of such chain transfer agents include alkyl mercaptans such as n-hexyl mercaptan, n-octyl mercaptan, t-octyl mercaptan, n-dodecyl mercaptan, t-dodecyl mercaptan, and n-stearyl mercaptan, 2,4-diphenyl-4-methyl-1-pentene, 2,4-diphenyl-4-methyl-2-pentene, xanthogen compounds such as dimethyl xanthogen disulfide and diisopropyl xanthogen disulfide, terpinolene, thiuram compounds such as tetramethylthiuram disulfide, tetraethylthiuram disulfide, and tetramethylthiuram monosulfide, phenolic compounds such as 2,6-di-t-butyl-4-methylphenol and styrenated phenol, allyl compounds such as allyl alcohol, halogenated hydrocarbon compounds such as dichloromethane, dibromomethane, and carbon tetrabromide, vinyl ethers such as α-benzyloxystyrene, α-benzyloxyacrylonitrile, and α-benzyloxyacrylamide, triphenylethane, pentaphenylethane, acrolein, methacrolein, thioglycolic acid, thiomalic acid, and 2-ethylhexyl thioglycolate. One type or two or more types of these chain transfer agents may be used. Although the amount of such chain transfer agents is not limited, the amount relative to 100 parts by mass of the monomers constituting the acrylic copolymer is usually 0 parts by mass to 5 parts by mass.

Examples of polymerization terminators include hydroxylamine, hydroxylamine sulfate, diethylhydroxylamine, hydroxylamine sulfonic acid and alkali metal salts thereof, sodium dimethyldithiocarbamate, and quinone compounds such as hydroquinone. One type or two or more types of these polymerization terminators may be used. Although the amount of polymerization terminators used is not limited, the amount relative to 100 parts by mass of the monomers constituting the acrylic copolymer is usually 0 parts by mass to 2 parts by mass. Here, when a polymerization terminator which has a functional group reactive with radicals on the polymer chain and an alkyl group is used as a polymerization terminator, an acrylic copolymer having an alkyl group at the polymerization termination end can be obtained.

Further, the pH of the polymer produced as described above may be adjusted using a base as a pH adjuster, if needed. Specific examples of such bases include sodium hydroxide, potassium hydroxide, calcium hydroxide, sodium hydrogen carbonate, ammonia, inorganic ammonium compounds, and organic amine compounds. One type or two or more types of these bases may be used. The pH is in the range of 1 to 11, preferably of 1.5 to 10.5, more preferably of 2 to 10.

In addition to the above components, polymerization auxiliary materials such as particle size modifiers, chelating agents, and oxygen scavengers may be used, if needed. One type or two or more types of these polymerization auxiliary materials may be used.

Emulsion polymerization may be performed batchwise, semi-batchwise, or continuously. The duration and temperature of the polymerization are not limited and can be appropriately selected according to the type of polymerization initiator used or other factors. Generally, the polymerization temperature is 10°C to 100°C, and the duration of the polymerization is 0.5 to 100 hours.

### <Salting-out step>

Any method may be used to recover (salt-out) a water-containing crumb from the emulsion polymerization liquid obtained as described above, including generally employed methods. An exemplary method includes supplying the emulsion polymerization liquid continuously or batchwise to an aqueous solution containing a salting-out agent. A water-containing crumb can be obtained by this procedure.

Non-limiting examples of usable salting-out agents include monovalent to trivalent metal salts, with monovalent metal salts being preferred. Specific examples include inorganic salts such as chlorides, sulfates, nitrates, and carbonates of lithium, sodium, potassium, or cesium, and organic salts such as acetates and phosphates. If a divalent or higher-valent metal salt (which exists as a metal ion in the acrylic copolymer) remains in the acrylic copolymer, the divalent metal ion can inhibit the crosslinking reaction, potentially adversely affecting low compression set. One type or two or more types of salting-out agents may be used.

Specific examples of monovalent metal salts include metal chlorides such as lithium chloride, sodium chloride, potassium chloride, and cesium chloride; metal sulfates such as lithium sulfate, sodium sulfate, potassium sulfate, and cesium sulfate; metal nitrates such as lithium nitrate, sodium nitrate, potassium nitrate, and cesium nitrate; metal carbonates such as lithium carbonate, sodium carbonate, potassium carbonate, and cesium carbonate; and metal acetates such as lithium acetate, sodium acetate, potassium acetate, and cesium acetate. Among these, sodium chloride, sodium sulfate, sodium nitrate, sodium carbonate, and sodium acetate are preferred, sodium sulfate and sodium nitrate are more preferred, and sodium sulfate is still more preferred. Also preferred is at least one selected from the group consisting of metal sulfates, metal acetates, or metal carbonates of sodium. These may be used alone or in combination of two or more.

As described above, if the divalent metal salt included in the monovalent metal salt used as a salting-out agent remains in the acrylic copolymer, it can adversely affect low compression set. Therefore, the purity of the monovalent metal salt is preferably 99.0% or higher, more preferably 99.5% or higher, and may be 100%.

In the salting-out step, the amount of monovalent metal salts added relative to 100 parts by mass of the emulsion polymerization liquid is preferably 0.01 to 10 parts by mass. More specifically, the lower limit of the amount is preferably 0.01 parts by mass, more preferably 0.1 parts by mass, still more preferably 1 part by mass, while the upper limit is preferably 10 parts by mass, more preferably 9.5 parts by mass, still more preferably 9 parts by mass. When the amount is within such a range, the residual monovalent metal ion content and residual divalent or higher-valent metal ion content in the acrylic copolymer after water washing can be appropriately controlled.

The residual monovalent metal ion (preferably, sodium ion) content in the acrylic copolymer of the present invention is preferably within the range of 30 mass ppm to 5000 mass ppm. The lower limit of the residual content is more preferably 50 mass ppm or higher, still more preferably 100 mass ppm or higher, particularly preferably 150 mass ppm or higher, most preferably 200 mass ppm or higher, while the upper limit is more preferably 4500 mass ppm or lower, still more preferably 4000 mass ppm or lower. If the residual content is outside such a range, heat resistance or low compression set may be adversely affected.

The residual divalent or higher-valent metal ion (preferably, combined magnesium and calcium ion) content in the acrylic copolymer of the present invention is preferably 300 mass ppm or lower, more preferably 200 mass ppm or lower, still more preferably 100 mass ppm or lower, particularly preferably 50 mass ppm or lower, most preferably 10 mass ppm or lower.

Moreover, the ratio of the residual monovalent metal ion (preferably, sodium ion) content to the residual divalent or higher-valent metal ion (preferably, combined magnesium and calcium ion) content ([residual monovalent metal ion (preferably, sodium ion) content]/[residual divalent or higher-valent metal ion (preferably, combined magnesium and calcium ion) content]) is preferably 10 or more, more preferably 50 or more, still more preferably 100 or more. For example, if the residual divalent or higher-valent metal ion content is larger than the residual monovalent metal ion content, low compression set may be adversely affected, as described above. Here, although the upper limit of the ratio is not limited, it is, for example, 10000 or less.

Herein, the residual metal ion contents in the acrylic copolymer are measured as described in EXAMPLES.

Although the salting-out temperature is not limited, it is generally 50°C to 100°C and is preferably in the range of 60°C to 100°C. When the salting-out temperature is within the above range, the types and amounts of residual metals in the acrylic copolymer tend to be more suitably adjustable within the specific ranges in the present application.

Further, an antioxidant may be added during the salting-out step. Specific examples of such antioxidants include phenolic antioxidants, amine antioxidants, phosphite antioxidants, and hindered amine antioxidants. One type or two or more types of these antioxidants may be used.

Further, during the salting-out step, the pH may be adjusted using a base as a pH adjuster, if needed. Specific examples of such bases include sodium hydroxide, potassium hydroxide, calcium hydroxide, sodium hydrogen carbonate, ammonia, inorganic ammonium compounds, and organic amine compounds. One type or two or more types of these bases may be used. The pH is in the range of 1 to 11, preferably of 2 to 10, more preferably of 4 to 8.

### <Water washing step>

The water-containing crumb obtained in the salting-out step is preferably washed with water to remove the salting-out agent. If water washing is not performed at all or is insufficient, residual metal ions derived from the salting-out agent may adversely affect mechanical properties and may precipitate during forming. Preferably, the water-containing crumb obtained in the salting-out step is sufficiently washed with water to remove the salting-out agent so that the acrylic copolymer has a residual monovalent metal ion content of 30 mass ppm or higher and 5000 mass ppm or lower, a residual divalent or higher-valent metal ion content of 300 mass ppm or lower, and a ratio of the residual monovalent metal ion content to the residual divalent or higher-valent metal ion content ([residual monovalent metal ion content]/[residual divalent or higher-valent metal ion content]) of 10 or more. In this case, the types and amounts of residual metals in the acrylic copolymer tend to be more suitably adjustable within the specific ranges in the present application.

The water washing process may be carried out by mixing the water-containing crumb with added water to wash it with water (batch process) or by washing the water-containing crumb with water while dewatering it continuously (continuous process). When either of the processes is used, the temperature during the water washing is preferably 5°C to 60°C, more preferably 10°C to 50°C, and the duration of mixing is 1 to 60 minutes, more preferably 2 to 30 minutes.

In the case of water washing through a batch process, the amount of water added to the water-containing crumb is not limited. To effectively reduce the amount of the salting-out agent remaining in the finally produced acrylic rubber, however, the amount of water used per water washing is preferably 50 to 9,800 parts by mass, more preferably 300 to 1,800 parts by mass, relative to 100 parts by mass of the acrylic copolymer component in the water-containing crumb.

The number of water washings is not limited. To reduce the amount of residual metal ions derived from the salting-out agent in the acrylic copolymer, it is preferably 2 to 8, more preferably 2 to 6. Here, the greater the number of water washings, the smaller the amount of residual metal ions. However, the number of water washings is preferably within the above range because the effect of removing the salting-out agent decreases as the number increases and also because an increase in the number of steps has a greater effect on reducing productivity.

Moreover, in the case of water washing through a continuous process, the endpoint of the water washing may be determined by measuring the electrical conductivity of the aqueous solution of the slurry mixture. The electrical conductivity is preferably 12 mS/cm or less, more preferably 10 mS/cm, still more preferably 8 mS/cm or less. At such an electrical conductivity or less, the amount of residual metal ions derived from the salting-out agent in the acrylic copolymer can be sufficiently reduced.

The electrical conductivity of the slurry mixture can be measured by placing a supernatant taken from the slurry mixture in a 110 mL sample can bottle; and measuring the electrical conductivity of the supernatant collected in the 110 mL sample can bottle at 23°C by the AC two-electrode method. The electrical conductivity can be measured using, for example, a portable electrical conductivity meter ES-51 available from HORIBA Ltd. and a general-purpose waterproof conductivity cell 9382-10D available from HORIBA Ltd.

### <Drying step>

The water-containing crumb after water washing may be dehydrated and dried to obtain an acrylic copolymer. Although drying may be carried out by any method, it is generally carried out using a flash dryer, a twin-screw extruder, a fluid dryer, or other dryers. Moreover, the drying step may be preceded by a dehydration step using a centrifuge or other similar devices.

In view of processability, the thus produced acrylic copolymer of the present invention preferably has a molecular weight in the range of 10 to 100, more preferably 15 to 90, still more preferably 20 to 80, as expressed in terms of the Mooney viscosity (ML1+4) at 100°C determined by a Mooney scorch test in accordance with JIS K 6300-1:2013.

Herein, the Mooney viscosity of the acrylic copolymer is measured as described in EXAMPLES.

The weight average molecular weight (Mw) of the acrylic copolymer of the present invention is preferably 100,000 to 8,000,000, more preferably 400,000 to 7,500,000, still more preferably 800,000 to 7,000,000. With such a Mw, the advantageous effect tends to be more suitably achieved.

### <Acrylic copolymer-containing composition>

The acrylic copolymer-containing composition of the present invention can be obtained by containing the acrylic copolymer described above and at least a crosslinking agent.

Examples of such crosslinking agents include conventionally known crosslinking agents usually used for rubber crosslinking, such as polyvalent amine compounds, polyvalent epoxy compounds, polyvalent isocyanate compounds, aziridine compounds, sulfur compounds, metal soaps, basic metal oxides, and organic metal halides. Polyvalent amine compounds are suitable among these.

Examples of polyvalent amine compounds include aliphatic polyvalent amine compounds such as hexamethylenediamine, hexamethylenediamine carbamate, and N,N'-dicinnamylidene-1,6-hexanediamine; and aromatic polyvalent amine compounds such as 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic acid dihydrazide. Aliphatic polyvalent amine compounds are preferred among these.

Examples of polyvalent epoxy compounds include phenol novolac epoxy compounds, cresol novolac epoxy compounds, cresol epoxy compounds, bisphenol A epoxy compounds, bisphenol F epoxy compounds, brominated bisphenol A epoxy compounds, brominated bisphenol F epoxy compounds, hydrogenated bisphenol A epoxy compounds, and other glycidyl ether epoxy compounds, alicyclic epoxy compounds, glycidyl ester epoxy compounds, glycidyl amine epoxy compounds, isocyanurate epoxy compounds, and other polyvalent epoxy compounds.

Examples of polyvalent isocyanate compounds include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of aziridine compounds include tris-2,4,6-(1-aziridinyl)-1,3,5-triazine, tris[1-(2-methyl)aziridinyl]phosphinoxide, and hexa[1-(2-methyl)aziridinyl]triphosphatriazine.

Examples of sulfur compounds include sulfur, 4,4'-dithiomorpholine, tetramethylthiuram disulfide, and tetraethylthiuram disulfide.

Examples of basic metal oxides include zinc oxide, lead oxide, calcium oxide, and magnesium oxide.

Examples of organic metal halides include dicyclopentadienyl metal dihalides, and examples of such metals include titanium and zirconium.

These crosslinking agents may be used alone or in combination of two or more. The amount of crosslinking agents relative to 100 parts by mass of the acrylic copolymer of the present invention is 0.05 parts by mass to 20 parts by mass, preferably 0.1 parts by mass to 10 parts by mass.

Moreover, the acrylic copolymer-containing composition of the present invention may optionally contain other additives usually used in the art, including, for example, lubricants, antioxidants, photostabilizers, fillers, reinforcing agents, plasticizers, processing aids, pigments, colorants, crosslinking accelerators, crosslinking aids, crosslinking retardants, antistatic agents, and foaming agents. These may be used alone or in combination of two or more.

Examples of reinforcing agents include carbon black. The amount thereof relative to 100 parts by mass of the acrylic copolymer is preferably 5 parts by mass or more, more preferably 10 parts by mass or more, still more preferably 30 parts by mass or more, while it is preferably 120 parts by mass or less, more preferably 100 parts by mass or less.

Examples of antioxidants include amine, phosphate, quinoline, cresol, phenolic, and metal dithiocarbamate antioxidants. Amine or phenolic antioxidants are preferred in the present invention. These may be used alone or in combination of two or more.

Examples of amine antioxidants include phenyl-α-naphthylamine, phenyl-β-naphthylamine, p-(p-toluenesulfonylamide)-diphenylamine, 4,4'-bis(α,α-dimethylbenzyl)diphenylamine, N,N-diphenyl-p-phenylenediamine, N-isopropyl-N'-phenyl-p-phenylenediamine, and butyraldehyde-aniline condensate.

Examples of phenolic antioxidants include 2,6-di-t-butyl-4-methylphenol, 2,6-di-t-butylphenol, butylated hydroxyanisole, 2,6-di-t-butyl-α-dimethylamino-p-cresol, octadecyl-3-(3,5-di-t-butyl-4-hydroxyphenyl)propionate, styrenated phenol, 2,2'-methylene-bis(6-α-methyl-benzyl-p-cresol), 4,4'-methylenebis(2,6-di-t-butylphenol), 2,2'-methylene-bis(4-methyl-6-t-butylphenol), 2,4-bis[(octylthio)methyl]-6-methylphenol, 2,2'-thiobis-(4-methyl-6-t-butylphenol), 4,4'-thiobis-(6-t-butyl-o-cresol), and 2,6-di-t-butyl-4-(4,6-bis(octylthio)-1,3,5-triazin-2-ylamino)phenol.

The amount of antioxidants relative to 100 parts by mass of the acrylic copolymer is preferably 0.1 to 10 parts by mass, more preferably 0.1 to 5 parts by mass, particularly preferably 0.3 to 3 parts by mass.

Examples of crosslinking accelerators include guanidine compounds, amine compounds, thiourea compounds, thiazole compounds, sulfenamide compounds, thiuram compounds, and quaternary ammonium salts, with guanidine or amine compounds being preferred. These may be used alone or in combination of two or more.

The amount of crosslinking accelerators relative to 100 parts by mass of the acrylic copolymer is preferably 0.1 to 15 parts by mass, more preferably 0.1 to 10 parts by mass, particularly preferably 0.1 to 5 parts by mass.

Further, rubbers, resins, or other similar materials usually used in the art may be blended without departing from the gist of the present invention. Examples of usual rubbers that may be used in the present invention include polybutadiene rubbers, styrene-butadiene rubbers, polyisoprene rubbers, natural rubbers, acrylonitrile-butadiene rubbers, acrylonitrile-butadiene-isoprene rubbers, ethylene-propylene-diene rubbers, and epichlorohydrin rubbers, and examples of resins include polymethyl methacrylate (PMMA) resins, polystyrene (PS) resins, polyurethane (PUR) resins, polyvinyl chloride (PVC) resins, ethylene/vinyl acetate (EVA) resins, styrene/acrylonitrile (AS) resins, and polyethylene (PE) resins. These may be used alone or in combination of two or more.

The combined amount of such rubbers and resins relative to 100 parts by mass of the acrylic copolymer of the present invention is 50 parts by mass or less, preferably 10 parts by mass or less, more preferably 5 parts by mass or less.

In view of processability, the extensional viscosity of the acrylic copolymer-containing composition of the present invention is preferably 100,000 to 3,000,000 Pa·s, more preferably 500,000 to 2,750,000 Pa·s, still more preferably 750,000 to 2,500,000 Pa·s.

Herein, the extensional viscosity of the acrylic copolymer-containing composition is measured as described in EXAMPLES.

### <Crosslinked acrylic copolymer product (crosslinked acrylic rubber product)>

The crosslinked acrylic copolymer product of the present invention can be obtained by crosslinking the acrylic copolymer-containing composition described above.

To obtain the crosslinked acrylic copolymer product of the present invention, the acrylic copolymer-containing composition may be compounded using any device conventionally used in the field of rubber processing, such as an open roll mill, a Banbury mixer, or any of various kneaders. The compounding can be performed by a usual procedure employed in the field of rubber processing. For example, the following procedure may be employed: only a rubber is first kneaded, then compounding agents other than a crosslinking agent and a crosslinking accelerator are introduced to prepare an A-kneaded compound, and thereafter the crosslinking agent and the crosslinking accelerator are introduced to perform B-kneading.

The crosslinked acrylic copolymer product (crosslinked acrylic rubber product) of the present invention can be produced by heating the acrylic copolymer-containing composition to usually 100°C to 250°C. Although the duration of crosslinking depends on the temperature, it is usually 0.5 to 300 minutes. Crosslinking and forming may be performed in an integrated manner, or a previously formed product of the acrylic copolymer-containing composition may be reheated to produce a crosslinked acrylic copolymer product. Alternatively, a crosslinked acrylic copolymer product obtained by previously heating the composition may be processed for forming. Specifically, crosslinking and forming may be carried out by any method, including compression or injection molding using a mold, and heating using a steam can, an air bath, infrared rays, or microwaves.

The acrylic copolymer-containing composition of the present invention obtained as described above has excellent roll processability during processing, and the crosslinked acrylic copolymer product of the present invention has excellent normal-state physical properties such as elongation at break and excellent low compression set.

Taking advantage of the above-described characteristics, the crosslinked acrylic copolymer product (crosslinked acrylic rubber product) of the present invention can be suitably used in O-rings, packings, diaphragms, oil seals, shaft seals, bearing seals, mechanical seals, wellhead seals, seals for electrical and electronic equipment, seals for pneumatic equipment, and various types of gaskets, including: cylinder head gaskets to be mounted at the joint between a cylinder block and a cylinder head; rocker cover gaskets to be mounted at the joint between a rocker cover and a cylinder head; oil pan gaskets to be mounted at the joint between an oil pan and a cylinder block or transmission case; gaskets for fuel cell separators to be mounted between a pair of housings sandwiching a unit cell provided with a cathode, an electrolyte plate, and an anode; and gaskets for top covers of hard disk drives.

Moreover, the crosslinked acrylic copolymer product of the present invention can be suitably used as an extruded product or a molded crosslinked product for automotive applications, for example, in various hoses, including: fuel oil hoses around fuel tanks, such as fuel hoses, filler neck hoses, vent hoses, vapor hoses, and oil hoses; air hoses, such as turbo air hoses and emission control hoses; radiator hoses, heater hoses, brake hoses, and air conditioner hoses.

### EXAMPLES

The present invention will be specifically described with reference to, but not limited to, examples and comparative examples. In each of the examples and comparative examples, an acrylic copolymer was produced, and an acrylic copolymer-containing composition containing the acrylic copolymer and a crosslinking agent was crosslinked to obtain a crosslinked acrylic copolymer product, the physical properties of which were then evaluated.

### [Example 1]

### (Production of acrylic copolymer)

A polymerization reactor equipped with a thermometer, a stirring apparatus, a nitrogen introduction tube, and a pressure reducing apparatus was charged with 200 parts by mass of water, 4.0 parts by mass of a polyoxyalkylene alkyl ether phosphate, 138.0 parts by mass of ethyl acrylate, 256.0 parts by mass of n-butyl acrylate, and 6.0 parts by mass of monobutyl fumarate, and oxygen was thoroughly removed by repeating deaeration under reduced pressure and nitrogen replacement. Subsequently, 0.001 parts by mass of ferrous sulfate, 0.1 parts by mass of sodium ascorbate, and 0.1 parts by mass of t-amyl hydroperoxide were added, and an emulsion polymerization reaction was started at normal temperature under normal pressure. The reaction was continued until the polymerization conversion rate reached a predetermined value. Then, 0.0075 parts by mass of hydroquinone was added to terminate the polymerization. The resulting emulsion polymerization liquid was subjected to salting-out at a temperature between70°C and 80°C using a 10 mass% aqueous sodium sulfate solution such that the amount of sodium sulfate relative to 100 parts by mass of the emulsion polymerization liquid was 6 parts by mass. Then, water was drained and 120 parts of ion-exchange water was introduced to wash the polymer with water. The water washing process was repeated three times. The washed polymer was dried to obtain an acrylic copolymer. The acrylic copolymer was subjected to Mooney viscosity measurement, residual metal ion content measurement, and a capillary flow test according to the evaluation methods described below. Table 1 and Table 2 show the results.

### <Mooney Viscosity measurement (ML1+4 at 100°C)>

The Mooney viscosity (ML1+4) of the obtained acrylic copolymer was measured at a measurement temperature of 100°C using Mooney Viscometer AM-3 (Toyo Seiki Seisaku-sho, Ltd.) in accordance with the Mooney viscosity test in the physical testing method for uncrosslinked rubber stipulated in JIS K 6300-1:2013.

### <Residual metal ion content measurement>

The residual metal ion content in the obtained acrylic copolymer was quantified using an ICP emission spectrometer. Specifically, it was measured using an apparatus "ULTIMA2" available from HORIBA JOBIN YVON by taking about 0.5 g of a sample in a platinum crucible, pre-ashing the sample with an electric heater, heating the resulting sample in an electric furnace at 600°C for one hour, adding ultrapure water to the residue, heating the mixture to dissolve metals therein, making up the solution in a volumetric flask, and then measuring the residual metal ion contents. Here, the detected monovalent metal ions were only sodium ions, while the detected divalent or higher-valent metal ions were only magnesium and calcium ions. Other metal ion contents were below the detection limit.

### (Production of acrylic copolymer composition)

An amount of 100 parts by mass of the acrylic copolymer obtained above, 60 parts by mass of carbon black (classification according to ASTM D1765; N550), 2 parts by mass of stearic acid (dispersing agent for carbon black, softener), and 2 parts by mass of 4,4'-bis(α,α-dimethylbenzyl)diphenylamine (antioxidant) were kneaded at 120°C in a kneader to obtain an A-kneaded compound. The A-kneaded compound was subjected to a capillary flow test as described below. Table 2 shows the results. Thereafter, 0.6 parts by mass of hexamethylenediamine carbamate (aliphatic diamine crosslinking agent) and 2 parts by mass of di-o-tolylguanidine (crosslinking accelerator) were added, and the mixture was kneaded at room temperature using a kneading roll to obtain a B-kneaded compound, which was used as an acrylic copolymer-containing composition. The obtained acrylic copolymer composition was subjected to a normal-state physical property test and a compression set test as described below. Table 1 and Table 2 show the results.

### <Capillary flow test (extensional viscosity measurement)>

An amount of 100 parts by mass of the obtained acrylic copolymer was kneaded with 60 parts by mass of carbon black (classification according to ASTM D1765; N550), 2 parts by mass of stearic acid, and 2 parts by mass of 4,4'-bis(α,α-dimethylbenzyl)diphenylamine at 120°C in a kneader. The kneaded mixture was measured by a capillary rheometer R6000 available from IMATEK using a long die with a diameter of 1 mm and a length of 16 mm and a short die with a diameter of 1 mm and a length of 0.25 mm at a measurement temperature of 80°C while decreasing the shear rate in 11 steps from 1000 seconds to 10 seconds to determine the maximum extensional viscosity at an extension rate of 9 to 12 sec-1. Here, the optimal extension rate varies depending on the forming method, but since the measurement was carried out mostly in a high extension rate range, lower viscosity is considered to lead to better processability when compared under the same conditions.

### <Normal-state physical property test: 100% modulus, tensile strength, elongation, and hardness>

The acrylic copolymer composition was formed into a sheet with a thickness of 2 to 2.5 mm. The resulting uncrosslinked sheet was pressed at 180°C for 10 minutes and then heated in an air oven at 180°C for 12 hours to obtain a crosslinked acrylic rubber product. A No. 3 dumbbell specimen was punched out from the crosslinked product and then measured for 100% modulus, tensile strength, elongation, and hardness. The 100% modulus, tensile strength, and elongation were tested in accordance with JIS K 6251:2017 and evaluated using AGS-5KNY available from Shimadzu Corporation. The hardness was measured by a hardness test in accordance with JIS K 6253:2012 using a hardness tester available from Kobunshi Keiki Co., Ltd.

### <Compression set test>

The acrylic copolymer composition was press-vulcanized at 170°C for 20 minutes using a mold for preparing a specimen, and then an O-ring specimen was obtained. The O-ring specimen was measured under conditions of 175°C and 70 hours. When the rate of change after the measurement is 30% or lower, the low compression set is considered as excellent. The measurement was carried out in accordance with JIS K 6262:2013.

### [Example 2]

An acrylic copolymer was obtained as in Example 1, except that the polymerization initiator t-amyl hydroperoxide was changed to di-t-amyl hydroperoxide. The Mooney viscosity measurement, the residual metal ion content measurement, and the normal-state physical property test and compression set test of the crosslinked acrylic copolymer product were also performed as in Example 1. Table 1 shows the results.

### [Comparative Example 1]

An acrylic copolymer was obtained as in Example 1, except that the salting-out agent was changed from sodium sulfate to magnesium sulfate. The Mooney viscosity measurement, the residual metal ion content measurement, and the normal-state physical property test and compression set test of the crosslinked acrylic copolymer product were also performed as in Example 1. Table 1 shows the results.

### [Comparative Example 2]

An acrylic copolymer was obtained as in Example 1, except that the salting-out agent was changed from sodium sulfate to calcium chloride. The Mooney viscosity measurement, the residual metal ion content measurement, and the normal-state physical property test and compression set test of the crosslinked acrylic copolymer product were also performed as in Example 1. Table 1 shows the results.

### [Example 3]

An acrylic copolymer was obtained as in Example 1, except that the amounts of ethyl acrylate and butyl acrylate were changed to 394 parts by mass and 0 parts by mass, respectively. The Mooney viscosity measurement, the residual metal ion content measurement, the capillary flow test, and the normal-state physical property test and compression set test of the crosslinked acrylic copolymer product were also performed as in Example 1. Table 2 shows the results.

### [Comparative Example 3]

An acrylic copolymer was obtained as in Example 1, except that the polymerization initiator t-amyl hydroperoxide was changed to ammonium persulfate. The Mooney viscosity measurement, the residual metal ion content measurement, the capillary flow test, and the normal-state physical property test and compression set test of the crosslinked acrylic copolymer product were also performed as in Example 1. Table 2 shows the results.

### [Comparative Example 4]

An acrylic copolymer was obtained as in Example 1, except that the polymerization initiator t-amyl hydroperoxide was changed to hydrogen peroxide. The Mooney viscosity measurement, the residual metal ion content measurement, the capillary flow test, and the normal-state physical property test and compression set test of the crosslinked acrylic copolymer product were also performed as in Example 1. Table 2 shows the results.

### [Comparative Example 5]

An acrylic copolymer was obtained as in Example 1, except that the polymerization initiator t-amyl hydroperoxide was changed to t-butyl hydroperoxide. The Mooney viscosity measurement, the residual metal ion content measurement, the capillary flow test, and the normal-state physical property test and compression set test of the crosslinked acrylic copolymer product were also performed as in Example 1. Table 2 shows the results.

**[Table 1]**

| | | | | Example 1 | Example 2 | Comparative Example 1 | Comparative Example 2 |
|---|---|---|---|---|---|---|---|
| Ethyl acrylate | | | (parts by mass) | 138 | 138 | 138 | 138 |
| Butyl acrylate | | | (parts by mass) | 256 | 256 | 256 | 256 |
| Monobutyl fumarate | | | (parts by mass) | 6 | 6 | 6 | 6 |
| t-Amyl hydroperoxide | | | (parts by mass) | 0.1 | | 0.1 | 0.1 |
| Di-t-amyl hydroperoxide | | | (parts by mass) | | 0.1 | | |
| Ethyl acrylate | | | (mass %) | 34.5 | 34.5 | 34.5 | 34.5 |
| Butyl acrylate | | | (mass %) | 64.0 | 64.0 | 64.0 | 64.0 |
| Monobutyl fumarate | | | (mass %) | 1.5 | 1.5 | 1.5 | 1.5 |
| t-Amyl hydroperoxide | | | (mass %) | 0.025 | | 0.025 | 0.025 |
| Di-t-amyl hydroperoxide | | | (mass %) | | 0.025 | | |
| Mooney viscosity | | | (-) | 37 | 27 | 30 | 29 |
| Residual metal ion content | Salting-out agent | | | Na2SO4 | Na2SO4 | MgSO4 | CaCl2 |
| | Monovalent | Na | (mass ppm) | 310 | 2200 | 52 | 70 |
| | Divalent or higher-valent | Mg | (mass ppm) | 1.8 | 2 | 420 | - |
| | | Ca | (mass ppm) | - | - | - | 885 |
| | [Monovalent]/[Divalent or higher-valent] | | (-) | 172 | 1100 | 0.12 | 0.08 |
| Normal-state physical properties | M100 | | (MPa) | 5.9 | 3.4 | 5.7 | 5.5 |
| | TB | | (MPa) | 12.1 | 10.7 | 10.5 | 11.1 |
| | EB | | (%) | 190 | 250 | 170 | 180 |
| | HS (JIS A) | | (pts) | 62 | 57 | 62 | 61 |
| Compression set | | | (%) | 28 | 24 | 42 | 52 |

**[Table 2]**

| | | | | Example 1 | Example 3 | Comparative Example 3 | Comparative Example 4 | Comparative Example 5 |
|---|---|---|---|---|---|---|---|---|
| Ethyl acrylate | | | (parts by mass) | 138 | 394 | 138 | 138 | 138 |
| Butyl acrylate | | | (parts by mass) | 256 | | 256 | 256 | 256 |
| Monobutyl fumarate | | | (parts by mass) | 6 | 6 | 6 | 6 | 6 |
| t-Amyl hydroperoxide | | | (parts by mass) | 0.1 | 0.1 | | | |
| Ammonium persulfate | | | (parts by mass) | | | 0.1 | | |
| Hydrogen peroxide | | | (parts by mass) | | | | 0.1 | |
| t-Butyl hydroperoxide | | | (parts by mass) | | | | | 0.1 |
| Ethyl acrylate | | | (mass %) | 34.49 | 98.47 | 34.49 | 34.49 | 34.49 |
| Butyl acrylate | | | (mass %) | 63.98 | | 63.98 | 63.98 | 63.98 |
| Monobutyl fumarate | | | (mass %) | 1.5 | 1.5 | 1.5 | 1.5 | 1.5 |
| t-Amyl hydroperoxide | | | (mass %) | 0.03 | 0.03 | | | |
| Ammonium persulfate | | | (mass %) | | | 0.03 | | |
| Hydrogen peroxide | | | (mass %) | | | | 0.03 | |
| t-Butyl hydroperoxide | | | (mass %) | | | | | 0.03 |
| Mooney viscosity | | | (- ) | 37 | 43 | 36 | 35 | 34 |
| Extensional viscosity | | | (Pa·s) | 2,150,000 | 1,160,000 | 3,070,000 | 4,410,000 | 3,640,000 |
| Residual metal ion content | Salting-out agent | | | Na2SO4 | Na2SO4 | Na2SO4 | Na2SO4 | Na2SO4 |
| | Monovalent | Na | (mass ppm) | 310 | 3593 | 1843 | 2101 | 2204 |
| | Divalent or higher-valent | Mg | (mass ppm) | 1.8 | 2 | 8 | 2 | 0.5 |
| | | Ca | (mass ppm) | - | - | - | - | - |
| | [Monovalent]/[Divalent or higher-valent] | | (-) | 172 | 1797 | 230 | 1051 | 4408 |
| Normal-state physical properties | M100 | | (MPa) | 5.9 | 5.7 | 5.8 | 5.7 | 5.3 |
| | TB | | (MPa) | 12.1 | 13.1 | 12.1 | 12.1 | 11.3 |
| | EB | | (%) | 190 | 260 | 190 | 190 | 190 |
| | HS (JIS A) | | (pts) | 62 | 67 | 61 | 62 | 58 |
| Compression set | | | (%) | 28 | 22 | 29 | 31 | 26 |

Table 1 shows that salting-out with a monovalent metal salt resulted in improved compression set. Moreover, from the results in Table 2, acrylic copolymers produced using a t-amyl group-containing polymerization initiator exhibited lower extensional viscosity in a high extension rate range than those produced using commonly used polymerization initiators, suggesting that the acrylic copolymers had improved processability.

### INDUSTRIAL APPLICABILITY

The acrylic copolymer of the present invention can be widely used as a rubber product that takes advantage of its excellent processability and low compression set. In particular, a crosslinked product prepared from the acrylic copolymer of the present invention is effective for applications requiring excellent processability and excellent low compression set, including industrial rubber materials and automotive rubber materials, such as oil seals, engine gaskets, oil hoses, air hoses, and O-rings.

## Claims

1. An acrylic copolymer, comprising at least an alkyl acrylate-derived structural unit, a crosslinkable monomer-derived structural unit, and a polymerization initiator-derived structural unit, the acrylic copolymer satisfying the following conditions (A) and (B):
(A) the polymerization initiator-derived structural unit is a structural unit derived from a compound represented by the following formula (1) or (2): 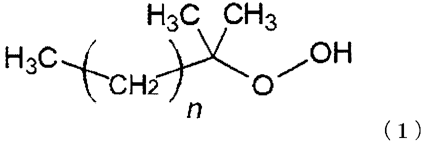 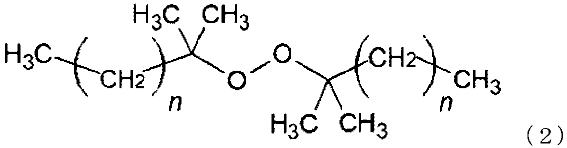 wherein n represents a natural number, and 1 ≤ n ≤ 4; and
(B) the acrylic copolymer has a residual monovalent metal ion content of 30 mass ppm or higher and 5000 mass ppm or lower, a residual divalent or higher-valent metal ion content of 300 mass ppm or lower, and a ratio of the residual monovalent metal ion content to the residual divalent or higher-valent metal ion content ([residual monovalent metal ion content]/[residual divalent or higher-valent metal ion content]) of 10 or more.

2. The acrylic copolymer according to claim 1,
wherein, per 100 mass% of the acrylic copolymer, an amount of alkyl acrylate-derived structural units is 50 to 99.8 mass%, an amount of crosslinkable monomer-derived structural units is 0.1 to 10 mass%, and an amount of polymerization initiator-derived structural units is 0.001 to 2 mass%.

3. The acrylic copolymer according to claim 1,
wherein at least one of the following is satisfied:
an amount of structural units derived from alkyl acrylates with C1-C3 alkyl groups is 0 to 100 mass% per 100 mass% of alkyl acrylate-derived structural units;
an amount of structural units derived from alkyl acrylates with C4-C6 alkyl groups is 0 to 100 mass% per 100 mass% of alkyl acrylate-derived structural units.

4. The acrylic copolymer according to claim 1,
wherein the crosslinkable monomer-derived structural unit is a structural unit derived from a carboxyl group-containing crosslinkable monomer.

5. An acrylic copolymer-containing composition, comprising the acrylic copolymer according to any one of claims 1 to 4 and at least a crosslinking agent.

6. A crosslinked acrylic rubber product, obtained by crosslinking the acrylic copolymer-containing composition according to claim 5.

7. A method for producing the acrylic copolymer according to claim 1, the method comprising:
emulsion polymerizing acrylic copolymer components, including at least an alkyl acrylate, a crosslinkable monomer, and an alkyl group-containing polymerization initiator, using an emulsifier to obtain an emulsion polymerization liquid;
performing salting-out with 0.01 to 10 parts by mass of a monovalent metal salt relative to 100 parts by mass of the emulsion polymerization liquid to obtain a water-containing crumb;
washing the water-containing crumb with water; and
drying the washed water-containing crumb.

8. The method for producing the acrylic copolymer according to claim 7,
wherein the monovalent metal salt is at least one selected from the group consisting of metal sulfates, metal acetates, or metal carbonates of sodium.
